# FASCICULE DE BREVET EUROPEEN

(11) **EP 1 950 694 B1**
(45) Date de publication et mention de la délivrance du brevet: **22.09.2010**
(21) Numéro de dépôt: 08150206.4
(22) Date de dépôt: 14.01.2008
(51) Int. Cl.: H04B 5/06, G06Q 10/00, G06K 17/00

(54) **Système de suivi sécurisé de marchandises**
Gesichertes Warenüberwachungssystem
System for securely following up goods

(30) Priorité: 26.01.2007 FR 0752920
(43) Date de publication de la demande: 30.07.2008
(73) Titulaire: NEOPOST TECHNOLOGIES, 92220 Bagneux (FR); NBG ID, 84300 Cavaillon (FR)
(72) Inventeur: Chatte, Fabien, 94130, NOGENT SUR MARNE (FR); Fabre, Bruno, 84300, CAVAILLON (FR); Gilham, Dennis, ESSEX, CM4 9LT (GB); Venture, Guy, 13560, SENAS (FR)
(74) Mandataire: David, Alain

(56) Documents cités:
- EP-A- 1 246 094
- FR-A- 2 869 439
- US-A1- 2005 093 702
- US-A1- 2006 158 328

## Description

### Domaine de l'invention

La présente invention se rapporte au domaine de la logistique et du transport de marchandises diverses et elle concerne plus particulièrement le suivi de ces marchandises pendant leur transport.

### Art antérieur

Pour avoir une connaissance à tout instant de la position d'un véhicule de livraison et donc des marchandises qui s'y trouvent, il est connu d'équiper ce véhicule d'un système GPS. Toutefois, outre que le système GPS est un système onéreux, il est en général uniquement présent dans la cabine du véhicule tracteur et non pas dans la semi-remorque ou les remorques qu'il peut éventuellement tracter. Il en résulte que, par exemple en cas de vol de cette semi-remorque ou de ces remorques, lorsque le tracteur en est séparé et qu'elles sont alors attachées à un autre véhicule tracteur, il devient impossible de savoir où se trouvent les marchandises car pour le système GPS le véhicule est toujours localisé au même emplacement celui de son tracteur.

### Objet et définition de l'invention

La présente invention a pour objet de pallier cet inconvénient en proposant un système à la fois simple et économique pour assurer un suivi automatisé de marchandises lors de leur transport par un véhicule de livraison.

Ce but est atteint par un système de suivi sécurisé de marchandises chargées dans un véhicule de livraison comportant une cabine de conduite et au moins un conteneur, caractérisé en ce que ladite cabine de conduite comporte un premier transpondeur RFID disposé sur une paroi quelconque de ladite cabine et chacun dudit au moins un conteneur comporte au moins deux transpondeurs RFID dont le premier est disposé sur une paroi quelconque dudit conteneur et ledit au moins deuxième est disposé sur chacune des portes de livraison dudit conteneur, chacun de ces transpondeurs RFID étant destiné à coopérer avec un lecteur/interrogateur RFID intégré dans un téléphone mobile du conducteur du véhicule, ledit téléphone mobile étant en liaison avec un serveur de gestion au travers d'un réseau de communication mobile.

Ainsi, l'emploi d'un téléphone mobile en lieu et place d'un GPS permet d'assurer avec précision un suivi des marchandises tout au long de leur transport et d'être informé immédiatement de toute disparition de ces marchandises.

Ledit transpondeur RFID disposé sur la porte de livraison comporte un circuit d'antenne monté à la jonction des deux battants de ladite porte pour délivrer une information sur un état ouvert ou fermé de ladite porte.

De préférence, ledit téléphone mobile comporte des moyens pour envoyer automatiquement au dit serveur de gestion, au travers dudit réseau de communication mobile, un message court lorsque au moins un desdits transpondeurs RFID ne répond pas à une interrogation dudit lecteur/interrogateur RFID. Ladite interrogation est effectuée périodiquement, par exemple toutes les cinq secondes.

Avantageusement, ledit lecteur/interrogateur RFID comporte des moyens pour procéder à une reconnaissance automatique desdits transpondeurs RFID présents dans son champ de communication et valider les seuls transpondeurs RFID associés au dit véhicule de livraison.

L'invention concerne aussi un procédé de suivi de marchandises chargées dans un véhicule de livraison comportant une cabine de conduite et au moins un conteneur, caractérisé en ce qu'il comporte les étapes suivantes :
- interrogation périodique par un lecteur/interrogateur RFID intégré dans un téléphone mobile du conducteur du véhicule de transpondeurs RFID dont un premier transpondeur RFID disposé sur une paroi quelconque de ladite cabine et au moins deux transpondeurs RFID disposés dans ledit au moins un conteneur dont l'un est disposé sur une paroi quelconque de ladite caisse de chargement et l'autre est disposé sur chacune des portes de livraison de ladite caisse de chargement, et
- envoi automatique à un serveur de gestion, au travers d'un réseau de communication mobile, d'un message court lorsqu'au moins un desdits transpondeurs RFID ne répond pas à ladite interrogation périodique dudit lecteur/interrogateur RFID.

De préférence, ledit message court correspond au moins à l'un des messages suivants : « porte arrière remorque ouverte » « véhicule hors champ » ou « remorque(s) hors champ ».

Ce procédé peut comporter en outre une étape supplémentaire d'envoi au téléphone mobile du conducteur dudit véhicule par le serveur de gestion d'un message court de demande de renseignement après réception dudit message court signalant le véhicule ou au moins un conteneur hors champ.

Avantageusement, il comporte une étape initiale de reconnaissance automatique desdits transpondeurs RFID présents dans un champ de communication dudit lecteur/interrogateur RFID et de validation des seuls transpondeurs RFID associés au dit véhicule de livraison. Dans ladite étape initiale, le conducteur peut recevoir un message court lui fournissant la liste des transpondeurs RFID que son téléphone devra lire dans ladite étape d'interrogation périodique.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'un système de suivi sécurisé de marchandises selon l'invention,
- la figure 2 montre les différentes étapes du procédé de suivi sécurisé mis en oeuvre dans le système de la figure 1.

### Description détaillée d'un mode de réalisation préférentiel

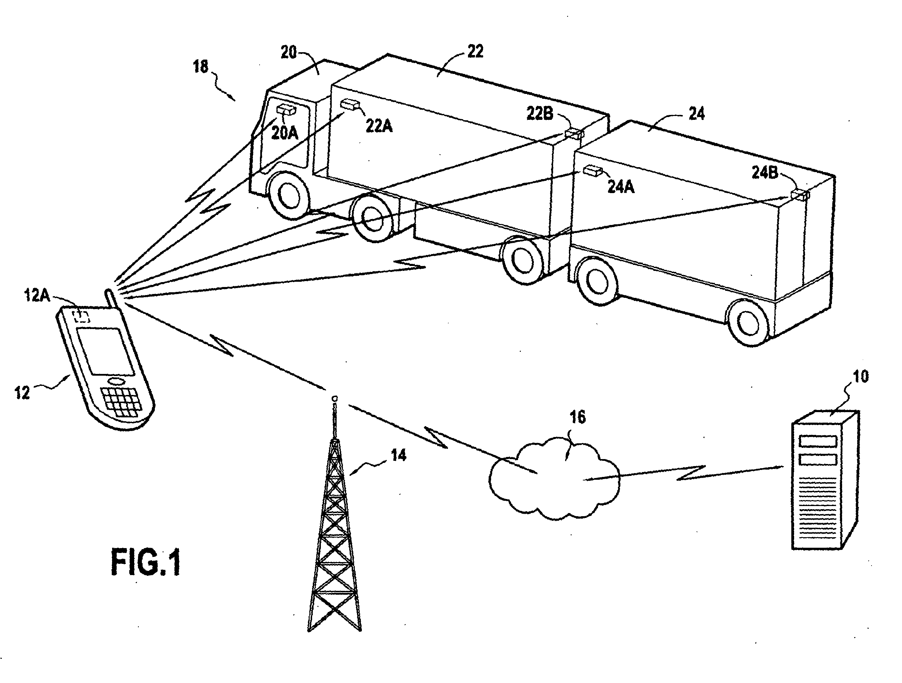

La figure 1 montre de façon très schématique le système de communication selon l'invention permettant d'assurer un suivi sécurisé des marchandises lors de leur transport vers leurs destinataires par des véhicules de livraison de type semi-remorque ou poids lourds à plusieurs essieux.

Ce système est organisé autour d'un serveur de gestion 10 qui est en communication radioélectrique avec des téléphones mobiles 12 via des relais mobiles 14 d'un réseau de communication cellulaire 16. Ce réseau est un réseau mobile de type connu de deuxième ou troisième génération GSM, Edge, UMTS ou équivalent. Toutefois, un réseau Wifi/Wimax est aussi envisageable. Le téléphone mobile comporte un lecteur/interrogateur RFID intégré 12A destiné à coopérer avec des transpondeurs RFID disposés dans un véhicule de livraison des marchandises 18 dont le conducteur est possesseur du téléphone mobile. Plus particulièrement, ce véhicule par exemple à quatre essieux qui comporte un tracteur avec sa cabine de pilotage 20 et deux remorques 22, 24 est équipé de cinq transpondeurs RFID, un sur le tracteur et deux sur chaque remorque. Le transpondeur RFID disposé sur le tracteur 20A et un 22A, 24A des deux transpondeurs RFID disposé sur chaque remorque servent à l'identification (et la vérification de présence) de la partie du véhicule correspondante alors que le second transpondeur RFID 22B, 24B de chaque remorque est positionné sur la porte arrière de livraison de chaque remorque pour délivrer une information sur l'état ouvert ou fermé de cette porte arrière. Ainsi, en détectant périodiquement les transpondeurs d'identification et de portes arrières, il est possible de s'assurer de la présence des remorques à l'arrière de leur tracteur et de savoir sans erreur possible si un déchargement du véhicule est en cours de réalisation.

Chaque transpondeur RFID qui comporte classiquement des moyens mémoires et des moyens d'émission/réception radio-fréquence peut être intégré dans une étiquette collée ou un boîtier monté sur une paroi quelconque intérieure ou non du véhicule ou, pour les transpondeurs RFID des portes arrières, être disposé à la jonction des deux battants de cette porte. Ainsi, chaque ouverture de porte, en ouvrant aussi le circuit d'antenne du transpondeur RFID associé, autorisera ou non ce transpondeur RFID à répondre à un signal envoyé par le lecteur/interrogateur RFID du téléphone mobile et donc à signaler par la même à ce dernier un état fermé ou ouvert de cette porte arrière.

Le lecteur/interrogateur RFID comporte classiquement des moyens d'émission/réception avec une antenne spécialement adaptée aux émissions RFID et un module électronique auto-alimenté comportant une source radio-fréquence et des composants électroniques (alimentation, modulateur, détecteur, convertisseur, unité de traitement, mémoire avantageusement partagée avec celle du téléphone) nécessaires à la mémorisation des informations d'identification échangées entre le module électronique et les transpondeurs RFID et lorsque ces transpondeurs RFID ne sont pas du type actifs ou semi-actifs (donc avec leur propre alimentation en énergie) à leur alimentation à distance. Selon la capacité mémoire disponible dans le téléphone mobile, le traitement des informations reçues peut être effectué en temps réel totalement ou en partie dans l'unité de traitement du lecteur/interrogateur RFID ou bien en différé au niveau du serveur de gestion via le réseau de communication mobile.

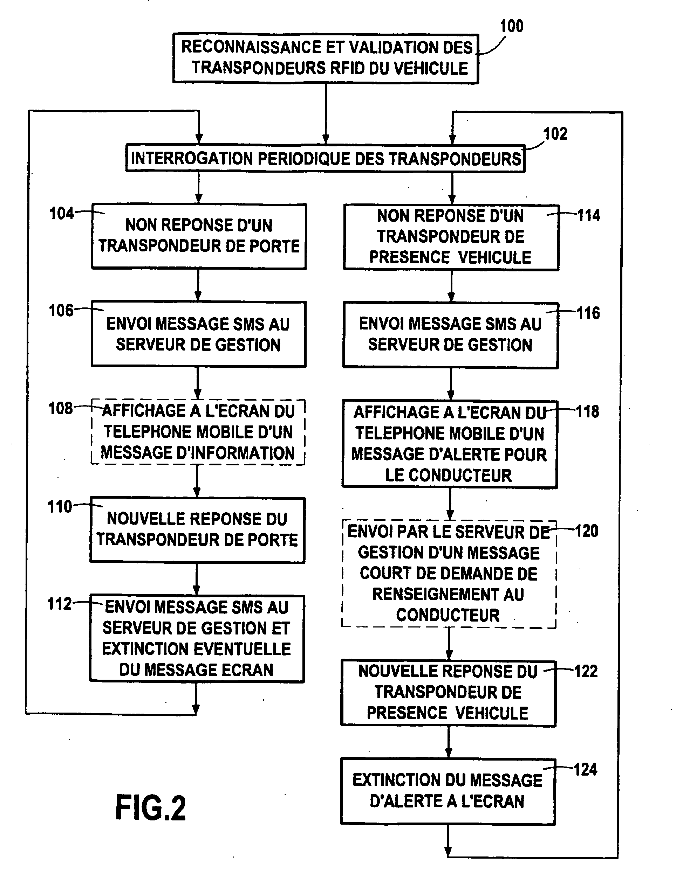

Le fonctionnement du système de communication selon l'invention est maintenant explicité en regard de la figure 2 qui montre un organigramme du procédé de suivi sécurisé mise en oeuvre dans ce système.

Il convient tout d'abord de rappeler que chaque conducteur de véhicule est pourvu d'un téléphone mobile 12 qui lui est spécialement affecté et qui comporte les moyens logiciels nécessaires au pilotage du lecteur/interrogateur RFID 12A.

Dans une première étape 100, ces moyens logiciels sont initialisés et notamment il est procédé, par exemple lors du chargement du véhicule, à une reconnaissance automatique par le lecteur/interrogateur RFID du téléphone mobile des transpondeurs RFID dans son champ de communication et à une validation des seuls transpondeurs RFID associés au véhicule du conducteur ayant ce téléphone mobile. Pour cela, le conducteur aura reçu préalablement un message court lui fournissant la liste des transpondeurs RFID que son téléphone devra lire lors du transport dont il est chargé, ceci afin d'éviter que le conducteur ne parte avec un véhicule qui ne lui était pas destiné.

Dans une étape 102, le téléphone mobile ainsi activé peut donc commencer son interrogation périodique des transpondeurs RFID via le lecteur/interrogateur RFID. Cette interrogation peut par exemple être effectuée toutes les cinq secondes ou à une fréquence supérieure. Si le chargement a été fait correctement et notamment si les portes arrières des remorques sont bien fermées, le téléphone mobile va recevoir cinq signaux des cinq transpondeurs RFID du véhicule (exemple du véhicule illustré à la figure 1) et cette réception va se poursuivre pendant tout le transport, de l'aire de chargement des marchandises à leur aire de livraison, dans attente d'un évènement particulier en principe une non réponse d'un ou deux des transpondeurs RFID correspondant à l'ouverture des portes arrières lors du déchargement des marchandises sur l'aire de livraison.

En effet, dans une étape 104, l'ouverture d'une porte arrière va entraîner la coupure du circuit d'antenne, par exemple du transpondeur RFID 24B, et donc une non réponse de ce transpondeur RFID lors de l'interrogation. Cette non réponse va entraîner dans une étape suivante 106, l'envoi automatique d'un message court, par exemple un SMS, au serveur de gestion qui sera donc informé de l'ouverture de la porte arrière du véhicule. Parallèlement, dans une étape 108, une indication « porte arrière remorque 2 ouverte » peut être affichée sur l'écran du téléphone mobile. La fermeture ultérieure de cette porte arrière dans une étape 110 va, en rétablissant le circuit d'antenne précité, provoquer à nouveau la détection du transpondeur RFID par le lecteur/interrogateur RFID lors d'une nouvelle interrogation et corrélativement l'envoi, dans une étape 112, d'un message court à l'attention du serveur de gestion et éventuellement l'extinction corrélative de l'indication à l'écran du téléphone mobile.

Toutefois, dans certains cas particuliers, la non réponse d'un ou deux des transpondeurs RFID ne résultera pas de l'ouverture des portes arrières du véhicule lors du déchargement des marchandises mais de l'éloignement du véhicule ou des seules remorques du champ de communication du téléphone mobile, cet éloignement pouvant être volontaire (déchargement terminé, changement de tracteur), involontaire (le chauffeur s'étant trop écarté du véhicule) ou résulter d'un vol du véhicule en son entier ou des remorques seulement.

Cette non réponse particulière (étape 114) va alors entraîner, dans une étape suivante 116, l'envoi automatique d'un message court au serveur de gestion qui sera donc informé de l'éloignement du véhicule ou du détachement des remorques selon le ou les transpondeurs RFID concernés. Parallèlement, dans une étape 118, une indication « véhicule hors champ » ou « remorque 2 hors champ » ou encore « remorques 1 et 2 hors champ » selon le ou les transpondeurs RFID concernés sera affichée sur l'écran du téléphone mobile, associée si nécessaire à une alerte sonore ou vibrante, permettant au conducteur de réagir immédiatement et, en cas de vol par exemple, de prévenir alors très vite les autorités. S'il s'agit d'un simple éloignement involontaire, par exemple si le véhicule est garé trop loin d'un point de restauration choisi par le chauffeur, celui-ci peut aussi y remédier très rapidement. Son rapprochement du véhicule et le retour de celui-ci dans le champ de communication du téléphone mobile (étape 122) provoquera alors la suppression de l'indication correspondante de son écran (étape 124).

Toutefois, cette information de « véhicule hors champ » ayant été communiquée par SMS au serveur de gestion, si le serveur de gestion après localisation du véhicule par triangulation sur le réseau de communication mobile détecte qu'il ne se trouve pas à son point de livraison où la ou les remorques doivent être détachées, celui-ci envoie alors, dans une étape 120, un message court au conducteur en lui demandant la raison de cette communication et procède à un échange d'informations avec le conducteur, cet échange pouvant bien entendu se poursuivre directement au téléphone.

Ainsi, avec l'invention, les sociétés de transport sont capables avec l'invention de localiser leur flotte de véhicules et de déterminer en temps réel quant tel ou tel véhicule a été déchargé ou rechargé.

On notera que si dans la description précitée la reconnaissance initiale des transpondeurs RFID d'un véhicule a été faite automatiquement, il est clair qu'une saisie manuelle au téléphone mobile des codes des différents transpondeurs RFID associés à ce véhicule est bien entendu aussi possible. De même, on pourra noter que si la description a fait référence essentiellement à des véhicules poids lourds avec remorques, la présente invention peut s'appliquer à tout type de véhicule et notamment à de simple véhicules utilitaires comportant une cabine de conduite et une caisse ou cellule de chargement ou à des véhicules porteurs dont le conteneur a non seulement une porte arrière de livraison mais aussi une porte latérale et qui comporte donc un transpondeur RFID sur chacune d'entres elles.

## Revendications

1. Système de suivi sécurisé de marchandises chargées dans un véhicule de livraison (18) comportant une cabine de conduite (20) et au moins un conteneur (22, 24), **caractérisé en ce que** ladite cabine de conduite comporte un premier transpondeur RFID (20A) disposé sur une paroi quelconque de ladite cabine et chacun dudit au moins un conteneur comporte au moins deux transpondeurs RFID dont le premier (22A, 24A) est disposé sur une paroi quelconque dudit conteneur et ledit au moins deuxième transpondeur (22B, 24B) est disposé sur chacune des portes de livraison dudit conteneur, chacun de ces transpondeurs RFID étant destiné à coopérer avec un lecteur/interrogateur RFID (12A) intégré dans un téléphone mobile (12) du conducteur du véhicule, ledit téléphone mobile étant en liaison avec un serveur de gestion (10) au travers d'un réseau de communication mobile (16).

2. Système selon la revendication 1, **caractérisé en ce que** ledit au moins deuxième transpondeur RFID disposé sur la porte de livraison comporte un circuit d'antenne monté à la jonction des deux battants de ladite porte pour délivrer une information sur un état ouvert ou fermé de ladite porte.

3. Système selon la revendication 1, **caractérisé en ce que** ledit téléphone mobile comporte des moyens (12) pour envoyer automatiquement au dit serveur de gestion, au travers dudit réseau de communication mobile, un message court lorsque au moins un desdits transpondeurs RFID ne répond pas à une interrogation dudit lecteur/interrogateur RFID.

4. Système selon la revendication 2, **caractérisé en ce que** ladite interrogation est effectuée périodiquement, par exemple toutes les cinq secondes.

5. Système selon l'une quelconque des revendications 1 à 4, **caractérisé en ce que** ledit lecteur/interrogateur RFID comporte des moyens (12A) pour procéder à une reconnaissance automatique desdits transpondeurs RFID présents dans son champ de communication et valider les seuls transpondeurs RFID associés au dit véhicule de livraison.

6. Procédé de suivi de marchandises chargées dans un véhicule de livraison (18) comportant une cabine de conduite (20) et au moins un conteneur (22, 24), **caractérisé en ce qu'**il comporte les étapes suivantes :
. interrogation périodique par un lecteur/interrogateur RFID (12A) intégré dans un téléphone mobile (12) du conducteur du véhicule de transpondeurs RFID dont un premier transpondeur RFID (20A) disposé sur une paroi quelconque de ladite cabine et au moins deux transpondeurs RFID disposés dans ledit au moins un conteneur dont le premier (22A, 24A) est disposé sur une paroi quelconque dudit conteneur et ledit au moins deuxième transpondeur (22B 24B) est disposé sur chacune des portes de livraison dudit conteneur, et
. envoi automatique à un serveur de gestion (10), au travers d'un réseau de communication mobile (16), d'un message court lorsqu'au moins un desdits transpondeurs RFID ne répond pas à ladite interrogation périodique dudit lecteur/interrogateur RFID.

7. Procédé selon la revendication 6, **caractérisé en ce que** ledit message court correspond au moins à l'un des messages suivants : « porte arrière remorque ouverte » « véhicule hors champ » ou « remorque(s) hors champ ».

8. Procédé selon la revendication 6, **caractérisé en ce qu'**il comporte en outre une étape supplémentaire d'envoi au téléphone mobile du conducteur dudit véhicule par le serveur de gestion d'un message court de demande de renseignement après réception dudit message court signalant le véhicule ou au moins un conteneur hors champ.

9. Procédé selon la revendication 6, **caractérisé en ce qu'**il comporte une étape initiale de reconnaissance automatique desdits transpondeurs RFID présents dans un champ de communication dudit lecteur/interrogateur RFID et de validation des seuls transpondeurs RFID associés au dit véhicule de livraison.

10. Procédé selon la revendication 9, **caractérisé en ce que** dans ladite étape initiale le conducteur reçoit un message court lui fournissant la liste des transpondeurs RFID que son téléphone devra lire dans ladite étape d'interrogation périodique.

## Claims

1. A secure system for tracking goods loaded on a delivery vehicle (18) having a driver's cab (20) and at least one container (22, 24), **characterized in that** said driver's cab is provided with a first RFID transponder disposed on any wall of said cab, and each of said at least one container is provided with at least two RFID transponders, the first one of which (22A, 24A) is disposed on any wall of said container and at least the second RFID transponder (22B, 24B) is disposed on each of the delivery doors of said container, each of said RFID transponders being designed to co-operate with a RFID reader/interrogator (12A) integrated into a mobile telephone (12) of the driver of the vehicle, said mobile telephone being in communication with a management server (10) via a mobile communications network (16).

2. A system according to claim 1, **characterized in that** said at least second RFID transponder disposed on the delivery door has an antenna circuit mounted where the two flaps of said door meet so as to give information as to whether said door is in an open state or in a closed state.

3. A system according to claim 1, **characterized in that** said mobile telephone includes means (12) for automatically sending a short message to said management server, through said mobile communications network, when at least one of said RFID transponders does not respond to interrogation by said RFID reader/interrogator.

4. A system according to claim 2, **characterized in that** said interrogation is performed periodically, e.g. every five seconds.

5. A system according to claims 1 to 4, **characterized in that** said RFID reader/interrogator includes means (12A) for automatically recognizing said RFID transponders present within its communication range and for validating only those RFID transponders that are associated with said delivery vehicle.

6. A method of tracking goods loaded on a delivery vehicle (18) having a driver's cab (20) and at least one container (22, 24), **characterized in that** comprises the following steps:
• periodically interrogating RFID transponders via a RFID reader/interrogator (12A) incorporated in a mobile telephone (12) of the driver of the vehicle, a first one (20A) of said RFID transponders being disposed on any wall of said cab, and at least two of said RFID transponders being disposed in said at least one container, the first one (22A, 24A) of which being disposed on any wall of said container and the at least second RFID transponder (22B, 24B) is disposed on each of the delivery doors of said container; and
• automatically sending a short message to a management server (10), through a mobile communications network (16) when at least one of said RFID transponders does not respond to said periodic interrogation by said RFID reader/interrogator.

7. A method according to claim 6, **characterized in that** said short message corresponds to at least one of the following messages: "trailer rear door open", "vehicle out of range", or "trailer(s) out of range".

8. A method according to claim 6, further comprising an additional step of causing the management server to send an information request short message to the mobile telephone of the driver of said vehicle after said short message indicating that the vehicle or at least one container is out of range has been received.

9. A method according to claim 6, further comprising an initial step for automatically recognizing said RFID transponders present within the communication range of said RFID reader/interrogator and for validating only those RFID transponders that are associated with said delivery vehicle.

10. A method according to claim 9, **characterized in that** in said initial step, the driver receives a short message indicating to the driver the list of the RFID transponders that the driver's telephone should read in said periodic interrogation step.

## Patentansprüche

1. Gesichertes System zur Nachverfolgung von Waren, die in ein eine Fahrerkabine (20) und wenigstens einen Container (22, 24) umfassendes Lieferfahrzeug (18) geladen sind, **dadurch gekennzeichnet, daß** die Fahrerkabine einen ersten RFID-Transponder (20A) umfaßt, der an einer beliebigen Wand der Kabine angeordnet ist, und jeder des wenigstens einen Containers wenigstens zwei RFID-Transponder umfaßt, von denen der erste (22A, 24A) an einer beliebigen Wand der Container und der wenigstens zweite Transponder (22B, 24B) an jeder der Liefertüren der Container angeordnet ist, wobei ein jeder dieser RFID-Transponder dazu bestimmt ist, mit einem in ein Mobiltelefon (12) des Fahrzeugführers integrierten RFID-Lese-/Abfragegerät (12A) zusammenzuwirken, wobei das Mobiltelefon über ein Mobilkommunikationsnetz (16) mit einem Verwaltungsserver (10) in Verbindung steht.

2. System nach Anspruch 1, **dadurch gekennzeichnet, daß** der wenigstens zweite RFID-Transponder, der an der Liefertür angeordnet ist, einen an der Verbindung der beiden Flügel der Tür angebrachten Antennenkreis umfaßt, um eine Information über einen geöffneten oder geschlossenen Zustand der Tür zu liefern.

3. System nach Anspruch 1, **dadurch gekennzeichnet, daß** das Mobiltelefon Mittel (12) umfaßt, um an den Verwaltungsserver, über das Mobilkommunikationsnetz automatisch eine Kurzmitteilung zu senden, wenn wenigstens einer der RFID-Transponder nicht auf eine Abfrage des RFID-Lese-/Abfragegerätes reagiert.

4. System nach Anspruch 2, **dadurch gekennzeichnet, daß** die Abfrage regelmäßig, beispielsweise alle fünf Sekunden durchgeführt wird.

5. System nach einem der Ansprüche 1 bis 4, **dadurch gekennzeichnet, daß** das RFID-Lese-/Abfragegerät Mittel (12A) umfaßt, um eine automatische Erkennung der in seinem Kommunikationsfeld vorhandenen RFID-Transponder durchzuführen und um lediglich die dem Lieferfahrzeug zugeordneten RFID-Transponder freizugeben.

6. Verfahren zur Nachverfolgung von Waren, die in ein eine Fahrerkabine (20) und wenigstens einen Container (22, 24) umfassendes Lieferfahrzeug (18) geladen sind, **dadurch gekennzeichnet, daß** es die folgenden Schritte umfaßt:
- regelmäßiges Abfragen durch ein in ein Mobiltelefon (12) des Fahrzeugführers integriertes RFID-Lese-/Abfragegerät (12A) von RFID-Transpondern, darunter ein erster RFID-Transponder (20A), der an einer beliebigen Wand der Kabine angeordnet ist, sowie wenigstens zwei RFID-Transponder, die in dem wenigstens einen Container angeordnet sind, von denen der erste (22A, 24A) an einer beliebigen Wand der Container angeordnet ist und der wenigstens zweite Transponder (22B, 24B) an jeder der Liefertüren der Container angeordnet ist, und
- automatisches Senden einer Kurzmitteilung über ein Mobilkommunikationsnetz (16) an einen Verwaltungsserver (10), wenn wenigstens einer der RFID-Transponder nicht auf die regelmäßige Abfrage des RFID-Lese-/Abfragegerätes reagiert.

7. Verfahren nach Anspruch 6, **dadurch gekennzeichnet, daß** die Kurzmitteilung wenigstens einer der folgenden Mitteilungen entspricht: "hintere Anhängertür offen", "Fahrzeug außerhalb des Feldes" oder "Anhänger außerhalb des Feldes".

8. Verfahren nach Anspruch 6, **dadurch gekennzeichnet, daß** es ferner einen zusätzlichen Schritt umfaßt, nämlich des Sendens, durch den Verwaltungsserver an das Mobiltelefon des Fahrzeugführers, einer Kurzmitteilung mit der Bitte um Auskunft, nach Empfang der Kurzmitteilung, die signalisiert, daß sich das Fahrzeug oder wenigstens ein Container außerhalb des Feldes befindet.

9. Verfahren nach Anspruch 6, **dadurch gekennzeichnet, daß** es einen Anfangsschritt einer automatischen Erkennung der in einem Kommunikationsfeld des RFID-Lese-/Abfragegerätes befindlichen RFID-Transponder und einer Freigabe lediglich der dem Lieferfahrzeug zugeordneten RFID-Transponder umfaßt.

10. Verfahren nach Anspruch 9, **dadurch gekennzeichnet, daß** bei dem Anfangsschritt der Fahrer eine Kurzmitteilung empfängt, die ihm die Liste der RFID-Transponder liefert, die sein Telefon bei dem Schritt des regelmäßigen Abfragens lesen soll.
